**Europäisches Patentamt**

**European Patent Office**

**Office européen des brevets**

(19)

(11) Veröffentlichungsnummer : **0 044 007**
**B1**

(12) **EUROPÄISCHE PATENTSCHRIFT**

(45) Veröffentlichungstag der Patentschrift :
**15.08.84**

(21) Anmeldenummer : **81105175.4**

(22) Anmeldetag : **03.07.81**

(51) Int. Cl.³ : **F 16 D 65/56, F 16 D 59/02**

(54) **Betätigungsvorrichtung für Scheibenbremsen.**

(30) Priorität : **10.07.80 DE 3026131**

(43) Veröffentlichungstag der Anmeldung :
**20.01.82 Patentblatt 82/03**

(45) Bekanntmachung des Hinweises auf die Patenterteilung : **15.08.84 Patentblatt 84/33**

(84) Benannte Vertragsstaaten :
**CH FR GB IT LI**

(56) Entgegenhaltungen :
**DE-A- 2 124 659**
**DE-A- 2 800 300**
**DE-A- 2 840 836**
**DE-B- 2 124 120**
**DE-B- 2 218 929**

(73) Patentinhaber : **ALFRED TEVES GmbH**
**Guerickestrasse 7 Postfach 90 01 20**
**D-6000 Frankfurt am Main (DE)**

(72) Erfinder : **Schmidt, Herbert**
**Legienstrasse 35**
**D-6230 Frankfurt-Untergiederbach (DE)**
Erfinder : **Endler, Wolfgang**
**Hermann Friesenstrasse 23**
**D-6238 Hofheim (DE)**
Erfinder : **Haberland, Wilhelm**
**Im Burgfeld 142**
**D-6000 Frankfurt am Main (DE)**

**Beschreibung**

Die Erfindung bezieht sich auf eine Betätigungsvorrichtung für Scheibenbremsen mit wenigstens einem hydraulisch beaufschlagbaren Betätigungskolben, einem, von wenigstens einem koaxial zum Betätigungskolben angeordneten Spannkolben hydraulisch spannbaren und lösbaren Federspeicher und einer, zwischen Betätigungskolben und einem zu betätigenden Bremsglied angeordneten, automatischen Nachstellvorrichtung mit einem verstellbaren, aus Nachstellspindel und mit ihr verschraubbarer Nachstellmutter bestehenden Nachstellgestänge, dessen Länge entsprechend dem Belagverschleiß vergrößert wird.

Betätigungsvorrichtungen der genannten Art ermöglichen die Verwendung als Betriebsbremszylinder, als Feststellbremszylinder oder auch als Notbremszylinder, z. B. bei Druckausfall. Bei diesen Betätigungsvorrichtungen muß die axiale Länge des Bremsgestänges einstellbar sein, um die Einhaltung der vom Federspeicher abgegebenen Bremskraft sicherzustellen.

Aus der DT-A-2 840 836 ist eine Betätigungsvorrichtung der bezeichneten Art bekannt, bei der Federspeicher, Spannkolben, Betätigungskolben und Bremsgestänge mit Nachstellvorrichtung in der Achse liegend hintereinander angeordnet sind.

Die Kraftübertragung erfolgt durch zwei Betätigungskolben und das Bremsgestänge, wobei die Kolben entweder hydraulisch beaufschlagt werden oder mechanisch die Bremskraft des Federspeichers übertragen. Das Bremsgestänge ist als ineinandergreifende Gewindeanordnung aus Spindel und Mutter aufgebaut, so daß durch eine von der Nachstellvorrichtung erzeugte Drehbewegung, die auf das als Spindel ausgelegte, kolbenseitige Teil des Bremsgestänges übertragen wird, bei drehfestem äußeren Teil des Bremsgestänges eine axiale Längenänderung des Bremsgestänges und damit eine Nachstellung für Betriebsbremse und Feststellbremse erreicht wird.

Die nötige Einstellung der axialen Länge des Bremsgestänges durch Verdrehen des äußeren Teils wird dadurch erschwert, daß dieses sonst drehfeste Teil von mit ihm verbundenen Teilen der weiteren Anordnung vor dem Verdrehen abgekoppelt werden muß ; das ist umständlich und setzt eine gute Zugänglichkeit voraus.

In der DE-B-2 124 120 ist eine Betätigungsvorrichtung beschrieben, bei der Spannkolben und Federspeicher auf einem zentralen, von außen drehbaren Rohr angeordnet sind. Das Rohr ist an seinem inneren Ende als Gewindehülse ausgebildet und steht über eine in der Gewindehülse angeordnete Gewindespindel mit nur einseitig wirkendem Bewegungsgewinde mit dem druckraumseitigen Kolbenboden des hydraulisch beaufschlagbaren Betätigungskolbens in Verbindung. Es hat an seiner Außenseite einen Ringabsatz zur Weiterleitung der vom Federspeicher erzeugten Bremskraft auf den Kolben und die Bremsbacke. Das einseitig wirkende Bewegungsgewinde ermöglicht durch Verdrehung der Spindel gegen die Hülse als automatische Nachstellung die Vergrößerung der axialen Länge zwischen am Federspeicher anliegendem Rohransatz und Kolbenboden bei abnehmender Belagdicke.

Von außen ist durch eine Drehung der Hülse eine Einstellung der axialen Länge möglich.

Die beschriebene Ausführung hat eine automatische Belagverschleiß-Nachstellung nur für die Feststellbremse ; der Kolben muß zur Überbrückung des Verschleißweges deshalb einen großen axialen Weg zurücklegen.

Der Erfindung liegt die Aufgabe zugrunde, eine Betätigungsvorrichtung der eingangs genannten Art zu schaffen, bei der die Einstellung der axialen Länge des Bremsgestänges durch ein von außen zu betätigendes Nachstellelement ohne Demontage von Teilen möglich ist. Weiterhin soll durch geeignete Ausbildung die axiale Baulänge klein gehalten werden.

Erfindungsgemäß wird diese Aufgabe durch eine in der Achse der Betätigungsvorrichtung angeordnete drehbare Stange gelöst, die den Federspeicher und die Kolben durchgreift und drehfest mit der Nachstellmutter oder -spindel verbunden ist und deren Ende zur Einleitung einer Drehbewegung ausgebildet und von außen zugänglich ist.

Aus der DE-A-2 800 300 ist ferner bereits eine Betätigungsvorrichtung für Scheibenbremsen bekannt, bei der ein aus einem Druckbolzen und einer Nachstellmutter bestehendes Nachstellgestänge vorgesehen ist, wobei ein Ende des Druckbolzens mit dem Betätigungskolben mittels einer Scheibe und einem Sicherungsring verbunden und gegenüber dem Gehäuse mit einer Lasche druckfest gehalten ist. Das andere Ende des Druckbolzens weist ein Gewinde auf, welches in ein entsprechendes Gewinde der Nachstellmutter eingreift. Die Nachstellmutter ist als längliches Element ausgeführt, dessen eines Ende von außen zu Einstellzwecken zugänglich ist. Zwar erstreckt sich der Druckbolzen bremsscheibenseitig in eine flache Ausnehmung des Betätigungskolbens und federspeicherseitig durch den Kolben des Federspeichers ; bei dieser Anordnung wird jedoch eine relativ große Baulänge benötigt.

Schließlich ist aus der DE-A-2 124 659 bereits eine Betätigungsvorrichtung für eine hydraulisch und mittels Federspeicher betätigbaren Scheibenbremse bekannt, die eine innerhalb des Federspeichers angeordnete, sich am Spannkolben des Federspeichers einerseits und an einem Absatz einer Stange andererseits abstützende Druckfeder aufweist, welche den Spannkolben und die Stange gegeneinander verspannen.

Vorteilhaft weist die Stange Kraftübertragungsansätze auf, um den Einbau weiterer Teile zu vermeiden.

Dadurch, daß die Stange mit dem an der Nachstellbewegung nicht beteiligten Teil des Nachstellgestänges verbunden ist, braucht der Einfluß der Reibungskräfte durch die Vielzahl der auf der Stange befindlichen Dichtungen nicht berücksichtigt zu werden. Die Ausbildung der Nachstellvorrichtung ist dabei beliebig, z. B. kann eine Nachstellvorrichtung nach der DE-B-2 218 929 verwendet werden.

Eine aus wenigen einfachen, häufig verwendeten Teilen bestehende Nachstellvorrichtung überträgt die durch das Zusammenwirken von Drehringnut und Zapfen von einer Axialbewegung in eine Drehung des Drehrings umgesetzte Bewegung über einen Freilauf auf die Mantelfläche der Stange, so daß über das als Gewindehülse ausgebildete Stangenende eine axiale Längenänderung der Gewindeverbindung erreicht wird.

Die federnde Anordnung des Zapfens ermöglicht eine schnelle Entsperrung zur Einstellung der Nachstellvorrichtung durch von außen eingeleitete Drehung der Stange.

Dadurch, daß die Stange durch die Wirkung der Druckfeder mit ihrem Anschlag am direkt auf den Federspeicher wirkenden Spannkolben anliegt, wird die Einstellung eines definierten Lüftspiels erreicht.

Der Hauptvorteil der Erfindung ist darin zu sehen, daß in folge der Einleitung einer Drehbewegung an dem der gesamten Bremsanordnung abgewandten Ende der Betätigungsvorrichtung die Einstellung der axialen Länge der Kraftübertragungsanordnung erreicht wird. Durch die ineinandergeschachtelte Bauweise werden kleine Abmessungen der Betätigungsvorrichtung erreicht.

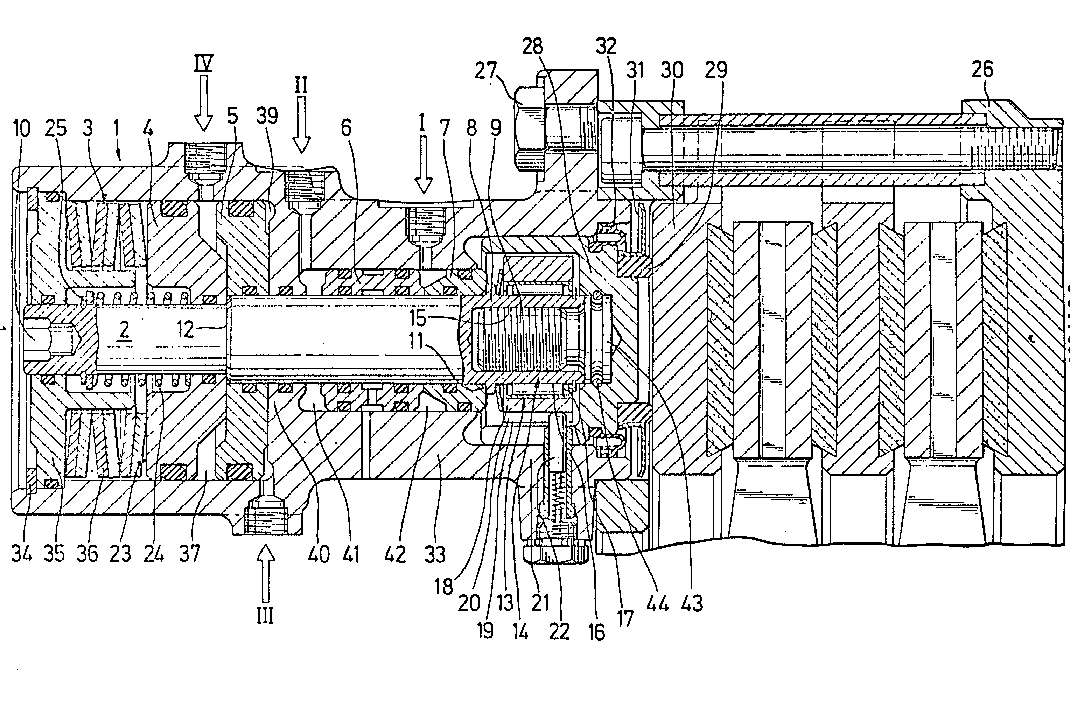

Ein Ausführungsbeispiel der Erfindung ist in der einzigen Zeichnung dargestellt und wird im folgenden näher beschrieben :

Eine erfindungsgemäße Betätigungsvorrichtung 1 ist an der Scheibenbremse 26 durch Schrauben 27 angeflanscht. Das Bremsglied 28 wirkt über einen Isolierring 29 auf den Bremsbelagträger 30 ein. Ein Hitzeschild 31 verhindert unerwünschten Wärmeübergang auf den Bereich der Dichtung 32. Der grundsätzliche Aufbau der Scheibenbremse ist aus der Zeichnung ersichtlich und deshalb nicht näher beschrieben.

Im auf der Zeichnung links befindlichen Teil des Gehäuses 33 der Betätigungsvorrichtung 1 ist der Federspeicher 3 angeordnet, der durch einen, von einem Sicherungsring 34 gehaltenen, mit Dichtungen versehenen Gehäusedeckel 35 axial gehalten wird. Der Federspeicher 3 besteht beispielsweise aus Tellerfedern 36. Am Federspeicher 3 anliegend ist der Spannkolben 4 und an diesem anliegend der Spannkolben 5 angeordnet. In axialer Richtung wird die Federspeicheranordnung hydraulisch dicht abgeschlossen durch eine Wand des Gehäuses 40. Zwischen Spannkolben 4 und Spannkolben 5 ist der abgedichtete Druckraum 37 des hydraulischen Lösekreises mit seiner Einlaßöffnung und zwischen Spannkolben 5 und Gehausewand 40 der abgedichtete Druckraum 39 des hydraulischen Spannkreises mit seiner Einlaßöffnung angeordnet.

Eine Stange 2 ist in der Achse der Betätigungsvorrichtung 1 angeordnet und durchgreift abgedichtet Gehäusedeckel 35, Federspeicher 3, die Spannkolben 4, 5 sowie die Gehäusewand 40 und erstreckt sich bis in den Bereich der Nachstellvorrichtung 13.

Die dem Federspeicher 3 abgewandte Fläche des Spannkolbens 4 überträgt die Bremskraft des Federspeichers 3 auf die Stange 2 durch den an ihr angeordneten Anschlag 12.

Im Bereich des Federspeichers 3 und im wesentlichen in Ausnehmungen des Gehäusedeckels 35 und des Spannkolbens 4 ist eine Druckfeder 24 angeordnet, die sich am Spannkolben 4 und an einem beispielsweise durch einen Sicherungsring gebildeten Absatz 25 der Stange 2, diese gegeneinander verspannend, abstützt.

Auf der anderen Seite der Gehäusewand 40 ist eine zweikreisige Betriebsbremse durch die hintereinanderliegenden abgedichteten Betätigungskolben 6, 7 mit den zugehörigen Druckräumen 41, 42 und Einlaßöffnungen ausgebildet ; die Betätigungskolben 6, 7 umgreifen die Stange 2 ringförmig. Die Betätigungskolben 6, 7 übertragen die Bremskraft auf einen ringförmigen Anschlag 11 der Stange 2.

Im Anschluß an den ringförmigen Anschlag 11 liegt das Ende 14 der Stange 2, das eine Hohlbohrung 15 mit Innengewinde aufweist und als Nachstellmutter 8 aufzufassen ist, die zusammen mit der in ihr angeordneten Nachstellspindel 9 die Nachstellung ermöglicht. Die Nachstellspindel 9 hat an ihrem, außerhalb der Gewindebohrung befindlichen Ende einen Kopf 43 mit einer Ringnut, in der die eine Hälfte eines Sicherungsrings 44 eingreift ; mit seiner anderen Hälfte sitzt der Sicherungsring 44 in einer Ringnut des Bremsgliedes 28 und ermöglicht so eine Mitnahme des Bremsgliedes 28 bei axialer Bewegung in Löserichtung ; die Bremskraft wird durch Anlage der Stirnfläche des Kopfes 43 an die Stirnfläche des Bremsgliedes 28 übertragen.

Auf der Mantelfläche 16 der Nachstellmutter 8 bzw. Stange 2 ist ein Freilauf 17 angeordnet. Der Freilauf 17 ist in einem Drehring 18 angeordnet, der eine schraubenförmige Nut 20 mit großer Steigung am Außenumfang 19 hat. Diese Nut 20 umgreift einen in der Gehäusewand 21 gelagerten Zapfen 22, der sich radial federnd aus der Nut ausklinken läßt.

Die Wirkungsweise der Nachstellvorrichtung 13 sei kurz beschrieben :

Diese Anordnung setzt eine Axialbewegung in eine Radialbewegung um. Die Nut 20 ist so breit gehalten, daß die Axialbewegungen im Rahmen des normalen Lüftspiels nicht zu einer Verdrehung des Drehrings 18 führen ; erst wenn das Lüftspiel durch Verschleiß überschritten wird, wird durch den Drehring 18 die Nachstellmutter 8 gegenüber der Nachstellspindel 9 so verdreht, daß die axiale Länge größer wird. Der Zapfen 22 ist radial federnd in der Gehäusewand 21 gelagert, um ein Ausklinken aus der Nut 20 bei der Ersteinstellung durch Verdrehen der Stange 2 von außen aus zu ermöglichen.

Die Wirkungsweise der Betätigungsvorrichtung 1 läßt sich wie folgt beschreiben :

In der gezeichneten Stellung wirkt die Betätigungsvorrichtung 1 als Feststellbremse ; d. h. alle vier hydraulischen Kreise I-IV sind drucklos. Die Stange 2, auf die die Federkraft des Federspeichers 3 über den Anschlag 12 aufgebracht wird, drückt über die Gewindeverbindung und das Bremsglied 28 auf den Bremsbelagträger 30 und bewirkt die Bremsung.

Wird die Fahrbereitschaft hergestellt, so wird bei drucklosem Kreis IV der Kreis III mit Druck beaufschlagt, der Spannkolben 5 spannt den Federspeicher 3 durch Bewegung der Spannkolben 4 und 5. Durch die Kraft der Druckfeder 24, die über den Absatz 25 auf die Stange 2 wirkt, wird diese in Bewegungsrichtung der Spannkolben verschoben, so daß der Anschlag 12 am Spannkolben 4 anliegt — ebenso verschieben sich durch den Anschlag 11 an der Stange 2 die Betätigungskolben 6, 7 in diese Richtung.

Bei Bremsung durch die Betriebsbremse, d. h. durch Druckaufbau in den Kreisen I und II leiten die Betätigungskolben 6, 7 über den Anschlag 11 die Bremskraft auf die Stange 2 ; die Weiterleitung auf den Bremsbelagträger 30 erfolgt über die Gewindeverbindung und das Bremsglied 28. Nach beendeter Bremsung erfolgt die Rückstellung der Stange 2 und der Betätigungskolben 6, 7 durch die Federkraft der Druckfeder 24.

Fällt der Druck im Kreis III, der die Spannung des Federspeichers 3 bewirkt, durch z. B. Undichtigkeit aus, so wird ungewollt eine Bremsung durch den Federspeicher 3 eingeleitet ; das Fahrzeug läßt sich trotz intakter Betriebsbremse nicht mehr bewegen. In diesem Fall wird die Lösefunktion durch Spannen des Federspeichers 3 durch Spannbewegung des Spannkolbens 4 infolge Druckaufbau im Kreis IV erreicht. Die Druckquelle kann dabei z. B. ein von der gesamten Hydraulik des Fahrzeugs unabhängiger Druckspeicher sein, wodurch bei Ausfall der Gesamthydraulik das Fahrzeug nicht bewegungsunfähig bleibt.

**Ansprüche**

1. Betätigungsvorrichtung für Scheibenbremsen mit wenigstens einem hydraulisch beaufschlagbaren Betätigungskolben (6, 7), einem, von wenigstens einem koaxial zum Betätigungskolben angeordneten Spannkolben (5) hydraulisch spannbaren und lösbaren Federspeicher (3) und einer, zwischen Betätigungskolben (6, 7) und einem zu betätigenden Bremsglied (28) angeordneten, automatischen Nachstellvorrichtung (13) mit einem verstellbaren, aus Nachstellspindel (9) und mit ihr verschraubbarer Nachstellmutter (8) bestehenden Nachstellgestänge, dessen Länge entsprechend dem Belagverschleiß vergrößert wird, gekennzeichnet durch eine in der Achse der Betätigungsvorrichtung (1) angeordnete drehbare Stange (2), die den Federspeicher (3) und die Kolben (4, 5, 6, 7) durchgreift und drehfest mit der Nachstellmutter (8) oder Nachstellspindel (9) verbunden ist und deren Ende (10) zur Einleitung einer Drehbewegung ausgebildet und von außen zugänglich ist.

2. Vorrichtung nach Anspruch 1, dadurch gekennzeichnet, daß die Stange (2) Anschläge (11, 12) für Spannkolben (4, 5) und Betätigungskolben (6, 7) aufweist, um die jeweilige Betätigungskraft zu übertragen.

3. Vorrichtung nach einem vorhergehenden Anspruch, dadurch gekennzeichnet, daß die Stange (2) mit dem Teil des Nachstellgestänges verbunden ist, das an der Verstellbewegung der Nachstellvorrichtung (13) nicht beteiligt ist.

4. Vorrichtung nach einem vorhergehenden Anspruch, dadurch gekennzeichnet, daß das innere Ende (14) der Stange (2) zur Bildung der Nachstellung mit einer Hohlbohrung (15) mit Innengewinde versehen ist und auf seiner Mantelfläche (16) einen Freilauf (17) trägt, der eine von der Nachstellvorrichtung (13) erzeugte Drehbewegung im Nachstellsinn auf die Stange (2) überträgt.

5. Vorrichtung nach einem vorhergehenden Anspruch, dadurch gekennzeichnet, daß die Drehbewegung zur Nachstellung durch einen Drehring (18) erzeugt wird, der am Außenumfang (19) mit einer, schräg zu einer Mantellinie, die parallel zur Achsrichtung läuft, angeordneten Nut (20) versehen ist und der bei Axialbewegung durch Abstützen der Nutwand an einem in der Gehäusewand (21) der Betätigungseinheit (1) angeordneten Zapfen (22) diese in eine Drehbewegung im Nachstellsinn umsetzt.

6. Vorrichtung Anspruch 5, dadurch gekennzeichnet, daß der Zapfen (22) in radialer Richtung federnd beweglich ist und von außen aus der Nut herausziehbar ist.

7. Vorrichtung nach einem vorhergehenden Anspruch, dadurch gekennzeichnet, daß sich an der dem Federspeicher (3) zugewandten Spannkolbenfläche (23) eine Druckfeder (24) abstützt, die innerhalb des Federspeichers (3) angeordnet ist und über einen an der Stange (2) angeordneten Absatz (25) diese gegen den Spannkolben (4) verspannt.

**Claims**

1. An actuator for disc brakes with at least one hydraulically pressurizable actuating piston (6, 7), with a spring assembly (3) which may be loaded and released hydraulically by means of at least one loading piston (5) arranged coaxially in respect of the actuating piston, and with an automatic adjusting device (13) which is arranged between actuating pistons (6, 7) and a brake element (28) to be actuated, which adjusting device has an adjustable adjusting linkage consisting of an adjusting spindle (9) and an adjusting nut (8) screwable with the spindle, the length of said adjusting linkage increasing in correspondence with the pad wear, characterized by a rotatable rod (2) arranged in the axis of the actuator (1), said rod (2) penetrating the spring assembly (3) and the pistons (4, 5, 6, 7) and being connected non-rotatably with the adjusting nut (8) or with the adjusting spindle (9) and the end (10) of said rod (2) being accessible from the outside and shaped such as to permit the initiation of a rotation.

2. A device as claimed in claim 1, characterized in that the rod (2) has stops (11, 12) for the loading pistons ( 4, 5) and actuating pistons (6, 7) in order to transmit the respective actuating force.

3. A device as claimed in any one of the preceding claims, characterized in that the rod (2) is connected with that part of the adjusting linkage which is not involved in the adjusting motion of the adjusting device (13).

4. A device as claimed in any one of the preceding claims, characterized in that the inner end (14) of the rod (2) has a blind bore (15) with internal thread for the purpose of forming the adjusting device and in that the rod (2), at its periphery (16), carries a free-wheel (17) transmitting a rotation generated by the adjusting device (13) to the rod (2) in the direction of adjustment.

5. A device as claimed in any one of the preceding claims, characterized in that the rotation for the adjustment is generated by a rotating ring (18), the outer circumference (19) of which has a groove (20) which is arranged at an angle in respect of a wall line running in parallel with the axial direction, in case of an axial motion said rotating ring (18) transforming said motion into a rotation in the direction of adjustment due to the supporting action of the groove wall at a pivot (22) arranged in the housing wall (21) of the actuator (1).

6. A device as claimed in claim 5, characterized in that the pivot (22) is radially movable in a resilient manner and may be removed out of the groove from the outside.

7. A device as claimed in any one of the preceding claims, characterized in that a compression spring (24) is supporting itself at the loading piston surface (23) confronting the spring assembly (3) and is arranged within the spring assembly (3) and tightens the rod (2) in respect of the loading piston (4) via a step (25) arranged on the rod (2).

**Revendications**

1. Dispositif de manœuvre pour frein à disque constitué par au moins un piston de commande (6, 7) actionnable hydrauliquement, par au moins un piston de serrage (5) coaxial au piston de commande et par un accumulateur à ressort (3) dont la mise en tension et le desserrage s'effectuent hydrauliquement, ainsi que par un dispositif de rattrapage de jeu automatique (13) disposé entre le piston de commande (6, 7) et un élément de frein (28) à actionner, comportant une liaison réglable (13) constituée par une tige de rattrapage de jeu (9) et par un écrou de réglage (8) pouvant se visser sur celle-ci et dont la longueur augmente en fonction de l'usure des garnitures, ce dispositif étant caractérisé en ce qu'une tige (2) susceptible de rotation disposée suivant l'axe du dispositif de manœuvre (1) est en prise avec l'accumulateur à ressort (3) et les pistons (4, 5, 6, 7) et reliée, sans possibilités de rotation, à l'écrou (8) ou à la tige de rattrapage de jeu (9), son extrémité (10) étant conformée en vue de l'introduction d'un mouvement de rotation et étant accessible de l'extérieur.

2. Dispositif selon la revendication 1, caractérisé en ce que la tige (2) présente des butées (11, 12) destinées aux pistons de serrage (4, 5) et aux pistons de commande (6, 7), afin de permettre la transmission de la force d'actionnement.

3. Dispositif selon une des revendications précédentes, caractérisé en ce que la tige (2) est reliée à la partie de la liaison qui ne participe pas au déplacement du dispositif de rattrapage de jeu (13).

4. Dispositif selon une des revendications précédentes, caractérisé en ce que l'extrémité intérieure (14) de la tige (2) est pourvue, aux fins de réajustage, d'un perçage (15) comportant un filetage intérieur et présente sur sa surface latérale (16) une roue libre (17) qui transmet à la tige, dans le sens du réglage, le mouvement tournant produit par le dispositif de rattrapage de jeu (13).

5. Dispositif selon une des revendications qui précèdent, caractérisé en ce que le mouvement de rotation de réajustage est produit au moyen d'une bague tournante (18) qui est pourvue sur son pourtour (19) d'une gorge (20) présentant une inclinaison par rapport à une génératrice parallèle à la direction de l'axe et qui transforme un mouvement axial en un mouvement tournant dans le sens du réglage, par suite de l'appui de la paroi de la gorge sur un tenon (22) disposé sur la paroi du corps de l'unité d'actionnement.

6. Dispositif selon la revendication 5, caractérisé en ce que le tenon (22) présente une certaine mobilité élastique dans le sens radial et peut être retiré de la gorge de l'extérieur.

7. Dispositif selon une des revendications qui précèdent, caractérisé en ce qu'un ressort de compression (24) s'appuie sur la face (23) du piston de serrage en regard de l'accumulateur à ressort, ce ressort étant disposé à l'intérieur de l'accumulateur (3) et maintient la tige (2) contre le piston de serrage (4) au moyen d'une saillie (25) arrangée sur la tige (2).